# EUROPEAN PATENT APPLICATION

(11) **EP 2 371 785 A2**
(43) Date of publication of application: **05.10.2011**
(21) Application number: 11160740.4
(22) Date of filing: 31.03.2011
(51) Int. Cl.: C04B 35/111, C04B 35/195, C04B 35/468, C04B 35/478, C04B 35/491, C04B 35/565, C04B 35/636, C04B 35/626, C04B 38/00

(54) **Extrusion molding composition and method for producing extrusion molded part**

(30) Priority: 01.04.2010 JP 2010084971
(71) Applicant: Shin-Etsu Chemical Co., Ltd., Chiyoda-ku, Tokyo (JP)
(72) Inventor: Hayakawa, Kazuhisa, Kubiki-ku, Joetsu-shi Niigata (JP)
(74) Representative: Swan, Elizabeth Mary

(57) **Abstract**

An extrusion molding composition comprising a cellulose or cellulose derivative, an ionic liquid and a ceramic material. The composition can be extrusion molded into a ceramic part at a high molding speed and without the formation of drying cracks.

## Description

### TECHNICAL FIELD

This invention relates to a ceramic extrusion molding composition containing an ionic liquid and a method for producing a ceramic extrusion molded part.

### BACKGROUND ART

Generally, ceramic compounds are extrusion molded by combining and kneading a ceramic raw material with molding auxiliaries such as an organic binder, a surfactant, a lubricant, and a plasticizer to form a kneaded clay and extruding the clay through a die of desired shape into a sheet, bar, hollow tube, prism, hollow prism, or honeycomb structure. In particular, extrusion molding of ceramic honeycomb structures is utilized in exhaust cleaning catalyst carriers, filters and heat exchangers in the automotive and general industries. To accommodate the current strict regulations of emission control, it is desired to provide ceramic honeycomb structures with thinner ribs for an improved cleaning performance, a reduced pressure loss, and a better heat exchange efficiency.

Most prior art methods for extrusion molding ceramic compositions use cellulose derivatives as the binder, for example, alkyl celluloses such as methyl cellulose, hydroxyalkyl celluloses such as hydroxyethyl cellulose, and hydroxyalkyl alkyl celluloses such as hydroxypropyl methyl cellulose and hydroxyethyl ethyl cellulose. The binder is kneaded with a ceramic raw material and water to form a kneaded clay, which is molded at or below room temperature.

The reason for using cellulose derivatives as the binder resides in their plasticity, water retention and thermal gelation. The use of cellulose ethers or derivatives has the advantages that no water separates out during extrusion molding and the molded part does not lose its shape during transfer from the molding step to the drying step. Also, thermal gelation of cellulose derivatives is caused by the heat of the drying step, to impart strength to the molded part, as opposed to with ordinary binders, where a reduction of viscoelasticity occurs upon heating so that the molded part may lose its shape before it becomes dry.

These cellulose ethers, however, have the following drawback. When a ceramic material, having cellulose ether added in an amount enough for the hot gel to develop the strength necessary to withstand the drying step, is extrusion molded through the die, a higher frictional force is exerted between the material and the die. The extrusion temperature is elevated by the frictional resistance. The cellulose derivative in the molding composition undergoes thermal gelation when heated, whereby the plasticizer loses fluidity, and the molding pressure is increased. This prevents the molded ceramic part from being quickly discharged out of the die. Namely, when a ceramic material having added thereto an organic binder incapable of thermal gelation is extrusion molded, the viscosity exerted by the organic binder is reduced by elevating the discharge temperature, whereby the molding speed can be accelerated. However, when a ceramic material using such a cellulose derivative capable of reversible thermal gelation as the binder is extrusion molded, it is difficult to increase the molding speed.

To overcome these drawbacks, JP 3321041 and JP-A 2002-293645 disclose organic additives effective for improving the extrusion molding process. These organic additives are still unsatisfactory.

### Citation List

Patent Document 1: JP 3321041 (USP 6117377, EP 0897899B1)
Patent Document 2: JP-A 2002-293645

### SUMMARY OF INVENTION

An object of the invention is to provide a ceramic extrusion molding composition which can be extrusion molded at a high speed and without drying shrinkage cracks. Also provided is a method for producing a ceramic extrusion molded part.

The inventor has found that when a composition comprising a cellulose and/or derivative thereof, an ionic liquid and a ceramic powder is extrusion molded, a ceramic molded part can be effectively produced at a high molding speed and without drying shrinkage cracks.

In one aspect, the invention provides an extrusion molding composition comprising a cellulose and/or derivative thereof, an ionic liquid in which the cellulose and/or derivative is dissolvable and a ceramic material.

Typically, the cellulose and/or derivative thereof dissolves in the ionic liquid at a temperature in the range of 40 to 110°C. The preferred cellulose derivative is a cellulose ether selected from among alkyl celluloses, hydroxyalkyl celluloses and hydroxyalkyl alkyl celluloses, all having an average degree of polymerization of at least 5,000.

In another aspect, the invention provides a method for producing a ceramic extrusion molded part, comprising the steps of kneading the components of the composition defined above, extrusion molding, drying and firing the kneaded composition.

### ADVANTAGEOUS EFFECTS OF INVENTION

The invention is successful in extrusion molding a ceramic composition at a high speed. The ceramic extrusion molded part is free from drying shrinkage cracks.

### DESCRIPTION OF EMBODIMENTS

Any suitable celluloses may be used, including those celluloses obtained from a wood pulp separated from wood and linter pulp originating from cottonseed, those celluloses obtained from plant products such as pulps from bamboo and hemp, and crystalline celluloses obtained by separating a highly crystalline fraction from cellulose.

Any cellulose derivatives may be used, as long as they dissolve in an ionic liquid at room temperature or a higher temperature. For example, water-soluble cellulose ethers, water-insoluble cellulose ethers and esterified celluloses are included. Preferred examples of the water-soluble cellulose ethers include alkyl celluloses, hydroxyalkyl celluloses and hydroxyalkyl alkyl celluloses, specifically methyl cellulose, hydroxyethyl cellulose, hydroxypropyl methyl cellulose, hydroxyethyl methyl cellulose, and hydroxyethyl ethyl cellulose. Examples of the water-insoluble cellulose ethers include ethyl cellulose and hydroxypropyl cellulose having a low degree of substitution which is insoluble in water, but soluble in alkaline aqueous solution. Examples of the esterified celluloses include acetylcellulose, nitrocellulose, benzylcellulose, cellulose acetate phthalate, hydroxypropyl methyl cellulose acetate phthalate, hydroxypropyl methyl cellulose acetate succinate, and hydroxypropyl methyl cellulose phthalate.

The celluloses and cellulose derivatives preferably have an average degree of polymerization of at least 5,000, so that they can be dissolved in an ionic liquid to form a thixotropic solution. The average degree of polymerization of a cellulose is determined by measuring the viscosity thereof in a copper-ethylenediamine solvent. The average degree of polymerization of a cellulose derivative is determined by gel permeation chromatography with multiple angle light scattering detection, commonly referred to as the GPC-MALLS method.

The cellulose and/or cellulose derivative is preferably added in an amount of 1 to 15 parts by weight, more preferably 3 to 12 parts by weight, per 100 parts by weight of the ceramic material. This creates sufficient thixotropic properties to provide the desired shape.

An ionic liquid is combined with the cellulose and/or cellulose derivative. It is an ionic liquid in which the cellulose and/or cellulose derivative dissolves at a temperature of 40 to 110°C that is often selected for extrusion molding. In other words, the ionic liquid used herein has a dissolving temperature of 40 to 110°C. Preferred examples of the ionic liquid include 1-butyl-3-methylimidazolium chloride, bromide, thiocyanate and tetrafluoroborate, as well as benzyldimethylammonium chloride and 1-ethyl-3-methylimidazolium acetate. In particular, 1-ethyl-3-methylimidazolium acetate is preferred because no inorganic ion is left upon pyrolysis of the ionic liquid and the cellulose and/or the cellulose derivative following extrusion molding. If the dissolving temperature of an ionic liquid is below 40°C, cooling may be necessary during extrusion molding. If the dissolving temperature of an ionic liquid is above 110°C, a loss of binding force may occur as a result of the cellulose and/or cellulose derivative being thermally decomposed.

The dissolving temperature of an ionic liquid, that is, the temperature at which a cellulose and/or cellulose derivative is dissolved in an ionic liquid, may be measured by charging a 10-mL vial with 5 g of an ionic liquid and 0.05 g of a cellulose and/or cellulose derivative, placing the vial on a magnetic stirrer/hot plate, and heating the vial at a rate of 1°C/min.

The ionic liquid is preferably added in an amount of 10 to 50 parts by weight, more preferably 20 to 40 parts by weight, per 100 parts by weight of the ceramic material. Outside the range, a molding composition containing less of the ionic liquid may become hard and difficult to mold to the desired shape, whereas a molding composition containing an excess of the ionic liquid may become difficult to maintain in the desired shape.

Examples of the ceramic material include dielectric ceramics, typically alumina, titanium oxide, and barium titanate, piezoelectric ceramics such as lead zirconate titanate (PZT), oxide ceramics such as cordierite ceramics containing kaolin and talc, silicon nitride, silicon carbide, and aluminum nitride.

If desired, a plasticizer may be added to the molding composition as long as the benefits of the invention are not impaired. Suitable plasticizers include glycerol and derivatives thereof, sorbitan fatty acid esters, polypropylene, polyethylene, ethylene-butadiene copolymers, and derivatives thereof. An organic porogen may also be added to make the ceramics lighter or porous. Such an additive may preferably be incorporated in an amount of 0.1 to 20 parts by weight, more preferably 1 to 10 parts by weight, per 100 parts by weight of the ceramic material.

Also, synthetic water-soluble polymers such as polyvinyl alcohol, polyethylene glycol and polyacrylamide, natural water-soluble polymers such as guar gum, microorganism fermented polysaccharides such as welan gum and other additives which are commonly used in combination with water-soluble cellulose ethers may be added as long as the benefits of the invention are not impaired.

The invention also provides a method for producing a ceramic extrusion molded part. The method starts with mixing a ceramic material with a cellulose or cellulose derivative, both of which are in powder form. An ionic liquid is added to the mixture, followed by wet mixing. The mixture is milled on a kneader at a preselected dissolving temperature, obtaining a ceramic kneaded mix.

A screw or piston extruder is adjusted to an interior temperature higher than the dissolving temperature of the ionic liquid. The ceramic kneaded mix is then extruded by the extruder at a higher temperature than the dissolving temperature, obtaining a molded part. Within the confines of the extruder screw or piston, the cellulose or cellulose derivative remains dissolved in the ionic liquid so that the kneaded mix having ceramic particles uniformly dispersed and mixed may be kept fluidized. The kneaded mix which is fluidized when hot displays a highly thixotropic fluidity. As used herein, the term "thixotropic" property means that when a deforming force is applied to a molded part, the kneaded mix is deformed in a fully compliant manner, but absent the deforming force, the kneaded mix quickly reverts back to the non-deforming rigid state. The kneaded mix assumes an extremely low viscosity state during fluidization and deformation, but exhibits a very high viscosity when it is discharged in the desired shape from the extruder and ceases to be fluidizing. When the kneaded mix is cooled below the dissolving temperature after the discharge, its viscosity increases sufficiently to allow it to retain its shape. Then the kneaded mix in the non-fluidized state is dried. While organic matter is decomposed by the heat of the drying step, the thixotropic property is sustained. The extrusion molded part is progressively sintered without losing its shape.

It is noted that the upper limit of the extrusion temperature is 130°C. At higher temperatures, the cellulose and/or cellulose derivative can be decomposed during extrusion molding, losing the desired thixotropic property.

The extrusion molded part of the desired shape is held at an ambient temperature of 3 to 30°C, and then dried. During the drying step, the solution of the cellulose and/or cellulose derivative in the ionic liquid increases its viscosity so that the extrusion molded part maintains its shape as molded. The extrusion molded part is held at ambient temperature for at least 3 hours. At this point, the part is turned upside down and visually inspected for cracks and shape retention.

The next step is firing. The firing step causes pyrolysis of the organic components including the ionic liquid and the cellulose and/or cellulose derivative at a high temperature of at least 500°C to effect binder burnout. At a high temperature of at least 500°C, the organic components are decomposed into organic fractions which become gaseous in the atmosphere and are burnt out, while ceramic particles are cemented at the boundaries and thus sintered. The upper limit of the firing temperature is usually up to 2,500°C, though not critical.

### EXAMPLE

Examples are given below by way of illustration only and not by way of limitation.

### Examples and Comparative Example

Ceramic extrusion molding compositions were prepared using a ceramic material and a water-soluble cellulose ether capable of reversible thermal gelation in accordance with the formulation (in parts by weight) shown in Table 1. They were extrusion molded under the conditions shown in Table 1.

### Ceramics

(1) Alumina ceramic: AL-160 by Showa Denko K.K.
(2) Cordierite ceramic: AF-2 by Marusu Glaze Co., Ltd.
(3) Lead zirconate titanate (PZT):
   PE-60A by Fuji Titanium Industry Co., Ltd.
(4) Barium titanate: YT-51 by KCM Corp.

### Water-soluble cellulose ethers

Hydroxypropyl methyl cellulose and methyl cellulose available from Shin-Etsu Chemical Co., Ltd. and hydroxyethyl cellulose available from SE Tylose GmbH, having a degree of polymerization (shown in Table 1) as measured by the GPC-MALLS method

| | |
|---|---|
| Cellulose ether A: | hydroxypropyl methyl cellulose having methoxyl substitution of 25 wt% and hydroxypropyl substitution of 8 wt% |
| Cellulose ether B: | hydroxypropyl methyl cellulose having methoxyl substitution of 28 wt% and hydroxypropyl substitution of 5 wt% |
| Cellulose ether C: | hydroxypropyl methyl cellulose having methoxyl substitution of 29 wt% and hydroxypropyl substitution of 9 wt% |
| Cellulose ether D: | methyl cellulose having methoxyl substitution of 30 wt% |
| Cellulose ether E: | hydroxyethyl cellulose having hydroxyethyl substitution of 56 wt% |

### Ionic liquid

| | |
|---|---|
| 1-ethyl-3-methylimidazolium acetate | |
| | (dissolving temperature 65°C) |
| | |
| 1-butyl-3-methylimidazolium chloride | |
| | (dissolving temperature 110°C) |

both reagents are available from Aldrich Co.

Ceramic and cellulose ether ingredients shown in Table 1 were mixed for 3 minutes on a Henschel mixer, combined with a predetermined amount of ionic liquid and then milled 5 passes on a compact three-roll mill of 4 x 3/4 inch (Inoue Mfg. Co., Ltd.) at a temperature adjusted such that the kneaded mix might reach a selected temperature. Using a laboratory vacuum extrusion molding machine with a screw of 20 mm diameter, the kneaded mix was extrusion molded under an extrusion pressure of 6.5 to 8 MPa into a green honeycomb structure having an outer diameter of 20.5 mm, a rib spacing of 2.5 mm and a rib gage of 0.5 mm. An extrusion molding temperature was measured. The molded part was cut into pieces of 50 mm in length, which were aged for 3 hours at room temperature, turned upside down 6 times and visually inspected to determine whether or not cracks had formed and the shape was retained. The results are shown in Table 1.

The aged pieces were placed in a sintering furnace where they were heated at 500°C for 3 hours to effect binder burnout. The dry pieces were then sintered by holding at 1,650°C for 3 hours in the case of alumina ceramic, or by enclosing in a magnesia sheath and holding at 1,300°C for 3 hours in the case of other ceramics. The sintered pieces were evaluated for cracks and shape retention, with the results shown in Table 1. Each test included 100 pieces of the molded part. The sample was rated "A" when no cracks were found, "B" when cracked pieces accounted for less than 1% and "C" when cracked pieces accounted for more than 1%. With respect to shape retention, the sample was rated "A" when no distortion was found, "B" when distorted pieces accounted for less than 1% and "C" when distorted pieces accounted for more than 1%.

In another run, a cellulose having a degree of polymerization, as determined by a viscosity measurement in a copper-ethylenediamine solvent, and a ceramic material were mixed for 3 minutes on a Henschel mixer, combined with a predetermined amount of ionic liquid and then milled 5 passes on a compact three-roll mill of 4 x 3/4 inch (Inoue Mfg. Co., Ltd.) at a temperature adjusted such that the kneaded mix might reach a selected temperature. Using a laboratory vacuum extrusion molding machine with a screw of 20 mm diameter, the kneaded mix was extrusion molded under an extrusion pressure of 6.5 to 8 MPa into a green honeycomb structure having an outer diameter of 20.5 mm, a rib spacing of 2.5 mm, and a rib gage of 0.5 mm. An extrusion molding temperature was measured. The molded part was cut into pieces of 50 mm in length, which were aged for 3 hours at room temperature, turned upside down 6 times and visually inspected to determine whether or not cracks had formed. The results are shown in Tables 2 and 3. The extrusion molded part was then sintered at 1,500°C for 8 hours before it was similarly evaluated.

**Table 1**

| Ingredients (amount, pbw) | Example | | | | | | | | | |
|---|---|---|---|---|---|---|---|---|---|---|
| | 1 | 2 | 3 | 4 | 5 | 6 | 7 | 8 | 9 | 10 |
| Alumina ceramic | | | | | | | | 100 | | |
| Cordierite ceramic | | 100 | 100 | 100 | 100 | 100 | | | | |
| Silicon carbide | | | | | | | 100 | | | |
| PZT | | | | | | | | | | 100 |
| Barium titanate | | | | | | | | | 100 | |
| Aluminum titanate | 100 | | | | | | | | | |
| Average degree of polymerization of cellulose ether | 4,000 | 4,000 | 10,000 | 15,000 | 30,000 | 75,000 | 10,000 | 4,000 | 8,000 | 10,000 |
| Cellulose ether A | 5 | | | | | | | | | 15 |
| Cellulose ether B | | 5 | | | | | | | 9 | |
| Cellulose ether C | | | 10 | | | | 5 | 7 | | |
| Cellulose ether D | | | | 5 | | 5 | | | | |
| Cellulose ether E | | | | | 15 | | | | | |
| 1-Ethyl-3-methyl-imidazolium acetate | 30 | 30 | 31 | 31 | 31 | 33 | 33 | 19 | 15 | 14 |
| Molding pressure (MPa) | 7 | 7 | 7 | 7 | 7 | 7 | 7 | 7 | 7 | 7 |
| Temperature of extrusion molding (°C) | 65 | 66 | 66 | 70 | 66 | 80 | 85 | 66 | 66 | 66 |
| Crack/shape retention after extrusion | A/A | A/A | A/A | A/A | A/A | A/A | A/A | A/A | A/A | A/A |
| Crack/shape retention after sintering | A/A | A/A | A/A | A/A | A/A | A/A | A/A | A/A | A/A | A/A |

**Table 2**

| Ingredients (amount, pbw) | Example | | | | | | | | | |
|---|---|---|---|---|---|---|---|---|---|---|
| | 11 | 12 | 13 | 14 | 15 | 16 | 17 | 18 | 19 | 20 |
| Alumina ceramic | | | | | | | | 100 | | |
| Cordierite ceramic | | 100 | 100 | 100 | 100 | 100 | | | | |
| Silicon carbide | | | | | | | 100 | | | |
| PZT | | | | | | | | | | 100 |
| Barium titanate | | | | | | | | | 100 | |
| Aluminum titanate | 100 | | | | | | | | | |
| Average degree of polymerization of pulp (cellulose) | 4,000 | 4,000 | 10,000 | 15,000 | 30,000 | 7,500 | 10,000 | 4,000 | 8,000 | 10,000 |
| Pulp (cellulose) | 5 | 5 | 5 | 5 | 5 | 5 | 5 | 15 | 6 | 5 |
| 1-Butyl-3-methyl-imidazolium chloride | 30 | 30 | 31 | 31 | 31 | 33 | | | | |
| 1-Ethyl-3-methyl-imidazolium acetate | | | | | | | 33 | 19 | 15 | 11 |
| Molding pressure (MPa) | 7 | 7 | 7 | 7 | 7 | 7 | 7 | 7 | 7 | 7 |
| Temperature of extrusion molding (°C) | 120 | 130 | 130 | 130 | 130 | 130 | 65 | 66 | 66 | 70 |
| Crack/shape retention after extrusion | A/A | A/A | A/A | A/A | A/A | A/A | A/A | A/A | A/A | A/A |
| Crack/shape retention after sintering | A/A | A/A | A/A | A/A | A/A | A/A | A/A | A/A | A/A | A/A |

**Table 3**

| Ingredients (amount, pbw) | Example | | | | | | | | Comparative Example |
|---|---|---|---|---|---|---|---|---|---|
| | 21 | 22 | 23 | 24 | 25 | 26 | 27 | 28 | 1 |
| Alumina ceramic | | | | | | | 100 | | |
| Cordierite ceramic | | 100 | 100 | 100 | 100 | | | | |
| Silicon carbide | | | | | | 100 | | | |
| PZT | | | | | | | | | 100 |
| Barium titanate | | | | | | | | 100 | |
| Aluminum titanate | 100 | | | | | | | | |
| Average degree of polymerization of pulp (cellulose) | 4,000 | 4,000 | 15,000 | 30,000 | 7,500 | 10,000 | 4,000 | 8,000 | 10,000 |
| Pulp (cellulose) | 5 | 5 | 0.5 | 5 | 18 | 5 | 15 | 0.5 | 5 |
| 1-Butyl-3-methyl-imidazolium chloride | 30 | 14 | 31 | 60 | 33 | | | | |
| 1-Ethyl-3-methyl-imidazolium acetate | | | | | | 33 | 19 | 15 | |
| Molding pressure (MPa) | 7 | 20 | 6 | 3 | 20 | 20 | 2 | 7 | unmeasurable |
| Temperature of extrusion molding (°C) | 100 | 130 | 130 | 130 | 130 | 55 | 90 | 60 | 70 |
| Crack/shape retention after extrusion | A/B | B/A | B/B | A/B | A/B | B/B | A/B | B/B | unmeasurable |
| Crack/shape retention after sintering | A/B | B/A | B/B | A/B | B/B | B/B | A/B | B/B | unmeasurable |

| | | | | | | | | | |
|---|---|---|---|---|---|---|---|---|---|
| * Comparative Example 1 was not extrudable. | | | | | | | | | |

## Claims

1. An extrusion molding composition comprising a cellulose and/or derivative thereof, an ionic liquid in which the cellulose and/or derivative is dissolvable and a ceramic material.

2. The composition of claim 1, wherein the cellulose and/or derivative thereof dissolves in the ionic liquid at a temperature in the range of 40 to 110°C.

3. The composition of any one of claims 1 or 2, wherein the cellulose derivative is a cellulose ether selected from the group consisting of alkyl celluloses, hydroxyalkyl celluloses and hydroxyalkyl alkyl celluloses, having an average degree of polymerization of at least 5,000.

4. A method for producing a ceramic extrusion molded part, comprising the steps of kneading the components of the composition of any one of claims 1 to 3, extrusion molding, drying and firing the kneaded composition.
